# EUROPÄISCHE PATENTSCHRIFT

(11) **EP 2 487 660 B1**
(45) Veröffentlichungstag und Bekanntmachung des Hinweises auf die Patenterteilung: **05.06.2019**
(21) Anmeldenummer: 12154920.8
(22) Anmeldetag: 10.02.2012
(51) Int. Cl.: G08B 25/04, G08B 26/00, G08B 29/18, H04L 12/40

(54) **Gefahrenmeldeanlage**
Hazard warning assembly
Installation d'alerte aux dangers

(30) Priorität: 10.02.2011 DE 102011010922
(43) Veröffentlichungstag der Anmeldung: 15.08.2012
(73) Patentinhaber: Novar GmbH, 41469 Neuss (DE)
(72) Erfinder: Krippendorf, Tido, 41812 Erkelenz (DE); Lübben, Bernd, 41352 Korschenbroich (DE); Politze, Heiner, 41469 Neuss (DE)
(74) Vertreter: Henkel, Breuer & Partner

(56) Entgegenhaltungen:
- DE-A1- 19 631 302
- DE-A1-102008 050 636
- DE-A1-102009 004 974

## Beschreibung

Die Erfindung betrifft ein Verfahren zum Betreiben einer Gefahrenmeldeanlage mit einer Zentrale und mindestens einem Steuermodul, das über eine als Feldbus benutzte Zweidrahtleitung mehreren Teilnehmern eine Versorgungsspannung liefert und Kommunikationstelegramme in Form von der Versorgungsspannung aufgeprägten Pulsfolgen sendet, wobei in jedem Teilnehmer aus der Versorgungsspannung eine interne Betriebsspannung erzeugt wird, die niedriger als die Versorgungsspannung ist.

Die Erfindung betrifft des weiteren eine Gefahrenmeldeanlage mit einer Zentrale und mindestens einem Steuermodul, an das über eine Zweidrahtleitung Teilnehmer angeschlossen sind, die von dem Steuermodul über die als Feldbus betriebene Zweidrahtleitung sowohl eine Versorgungsspannung als auch Kommunikationstelegramme in Form von der Versorgungsspannung als Spannungsmodulation aufgeprägten Pulsfolgen erhalten und jeder Teilnehmer eine an die Zweidrahtleitung angeschlossene Konstantstromschaltung umfasst, über die ein Speicherkondensator geladen wird, an den ein Spannungsregler angeschlossen ist, der eine interne Betriebsspannung erzeugt.

Gefahrenmeldeanlagen der vorstehend genannten Art sind Stand der Technik. Die Zweidrahtleitung, an die die Teilnehmer parallel angeschlossen sind, kann eine Länge von z.B. 1000 bis 2000 m haben und ist häufig ringförmig geführt, d.h. sie beginnt und endet an dem Steuermodul. Die Zweidrahtleitung wird auch einfach als Feldbus oder Meldelinie und das Steuermodul als Busmaster bezeichnet. Die Teilnehmer können Sensoren, z.B. Brand- oder Einbruchmelder und/oder Aktoren wie Lichtsignal- oder Schallsignalgeber sein. Die Versorgungsspannung der Teilnehmer kann am Anfang der Zweidrahtleitung im Bereich von z.B. 20 bis 40 Volt liegen.

Die Kommunikation zwischen dem Steuermodul und den Teilnehmern wird auf der Basis eines digitalen Kommunikationsprotokolls abgewickelt. Das Kommunikationsprotokoll definiert Zeitschlitze oder Zeitfenster, in denen Pulse und Pulsfolgen als Datentelegramme übertragen werden, die insbesondere Adressen, Befehle und Meldungen repräsentieren. Die Pulse können je nach ihnen zugewiesener Bedeutung Startimpulse mit einer Dauer von z.B. 1 ms, Synchronisations- oder Trennimpulse mit einer Dauer von z.B. 0,5 ms und bitcodierte Nachrichten repräsentierende Pulsfolgen mit einer Einzelpulsdauer von z.B. 100 bis 200 *µ*s umfassen.

Von dem Steuermodul zu den Teilnehmern werden die Pulse und Pulsfolgen durch Absenken des Pegels der Versorgungsspannung für die Dauer des jeweiligen Pulses, also in Form einer Spannungsmodulation der Versorgungsspannung, übertragen. Dabei kann der Spannungshub oder die Modulationstiefe der bitkodierte Nachrichten verkörpernden Pulsfolgen einige Volt betragen, während die "langen" Start- und/oder Trennimpulse durch andere Pegel, z.B. 0 Volt und/oder + 3 Volt haben können. Die Teilnehmer antworten meist mit einer entsprechenden Strommodulation.

Die Teilnehmer arbeiten mit einer internen Betriebsspannung, die jeder Teilnehmer aus der Versorgungs- oder Linienspannung ableitet. Um sicher zu stellen, dass die Versorgungs- oder Linienspannung nicht beim Initialisieren der Meldelinie oder infolge eines hohen Strombedarfes eines einzelnen Teilnehmers im laufenden Betrieb stark einbricht, wird in jedem Teilnehmer ein interner Speicherkondensator über eine Konstantstromschaltung geladen, die den Strom auf z. B. einige Hundert *µ*A begrenzt. An den Speicherkondensator ist ein Spannungsregler angeschlossen, der die interne Betriebsspannung von meist + 3,3 V liefert, mit welcher der Mikrocontroller und die meisten anderen Schaltungen der Teilnehmer arbeiten, abgesehen von Aktoren oder Aktorschaltungen, die ihre Spannungs- bzw. Stromversorgung unmittelbar aus dem Speicherkondensator beziehen.

Jeder Teilnehmer hat eine an die Zweidrahtleitung angeschlossene Kommunikationsschnittstelle, z.B. eine UART-Schnittstelle seines Mikrocontrollers, der die Pulse und Pulsfolgen detektiert und verarbeitet.

Dieses Kommunikationsverfahren hat in Verbindung mit der vorstehend beschriebenen Art der Gewinnung der internen Betriebsspannung der Teilnehmer den Nachteil, dass nicht nur die Versorgungsspannung sondern vor allem auch der die Spannungsmodulation verkörpernde Spannungshub, der am Anfang der Zweidrahtleitung z.B. 10 V betragen kann, infolge des ohmschen Widerstandes der Zweidrahtleitung zu deren Ende hin zunehmend kleiner wird. Das ist darauf zurückzuführen, dass die Konstantstromschaltungen der Teilnehmer die Zweidrahtleitung bzw. die Versorgungsspannung nur während der Pulspausen belasten, weil während der Pulsdauer die Versorgungsspannung unter dem Wert der Spannung liegt, auf die der Speicherkondensator jedes Teilnehmers als Spannungspuffer geladen ist, also die während der Pulsdauer niedrigere Linienspannung puffert. Anders ausgedrückt, werden die Versorgungsspannungsquelle und die Zweidrahtleitung nur während der Pulspause belastet, weil die Teilnehmer während der Pulsdauer aus ihrem internen Speicherkondensator gespeist werden.

Zum Ende der Zweidrahtleitung zu kann deshalb der Spannungshub infolge der mit der Zahl der Teilnehmer steigenden Belastung der Zweidrahtleitung in Verbindung mit deren ohmschen Widerstand so klein werden, dass die betreffenden Teilnehmer die Flanken der Pulse nicht mehr fehlerfrei detektieren können, denn es kommt hinzu, dass die Steilheit der Pulsflanken mit zunehmender Länge der Zweidrahtleitung abnimmt. Eine weitere Ursache für mit der Länge der Zweidrahtleitung zunehmende Kommunikationsfehler ist, dass ein zusätzlicher Strombedarf eines Teilnehmers, z. B. beim Anschalten einer Aktorschaltung, ebenfalls zu einer plötzlichen Abnahme der Versorgungsspannung führt. Dieses Absinken der Versorgungsspannung können ein oder mehrere Teilnehmer irrtümlich als die fallende Flanke eines Pulses detektieren.

DE 196 31 302 Al und DE 10 2008 050 636 A1 offenbaren weiteren Stand der Technik, der zum Verständnis des Hintergrunds der Erfindung hilfreich ist. Insbesondere beschreibt keine dieser Druckschriften, dass eine interne Speisespannung eines Busteilnehmers um mindestens die Amplitude der Pulse der Kommunikationstelegramme gegenüber der Versorgungsspannung verringert ist. DE 10 2009 004 974 beschreibt ein Verfahren zum Betreiben einer Gefahrenmeldeanlage mit einer Zentrale, die über eine als Feldbus benutzte Zweidrahtleitung mehreren Teilnehmern eine Versorgungsspannung liefert und Kommunikationstelegramme in Form von der Versorgungsspannung durch Spannungsabsenkung aufgeprägten Pulsfolgen sendet, wobei in jedem Teilnehmer aus der Versorgungsspannung eine interne Betriebsspannung erzeugt wird, die niedriger als die Versorgungsspannung ist. Die Versorgungsspannung in jedem Teilnehmer wird auf eine interne Speisespannung vermindert, die um mehr als die Amplitude von Pulsen der Kommunikationstelegramme kleiner als die Versorgungsspannung ist. Die interne Betriebsspannung des Teilnehmers wird aus dieser internen Speisespannung erzeugt.

Der Erfindung liegt die Aufgabe zugrunde, ein Verfahren zum Betreiben einer Gefahrenmeldeanlage der einleitend angegebenen Gattung zu schaffen, das eine verbesserte Kommunikationssicherheit bietet.

Diese Aufgabe ist erfindungsgemäß dadurch gelöst, dass die Versorgungsspannung in jedem Teilnehmer auf eine interne Speisespannung vermindert wird, die mindestens um die Amplitude der Pulse der Kommunikationstelegramme kleiner als die Versorgungsspannung ist, und dass die interne Betriebsspannung des Teilnehmers aus dieser internen Speisespannung erzeugt wird.

Dadurch wird erreicht, dass die Versorgungsspannung, genauer gesagt die Spannungsquelle in dem Steuermodul oder Busmaster, "symmetrisch" belastet wird, weil jeder Teilnehmer nun auch während der Dauer der Kommunikationspulse Strom aus der Zweidrahtleitung zieht. Folglich sinkt zwar die Versorgungsspannung im Ruhezustand und während des Sendens von Kommunikationstelegrammen während der Pulspausen wie bisher mit zunehmender Länge der Zweidrahtleitung, jedoch sinken auch die während der Pulsdauern niedrigeren Spannungspegel in etwa dem gleichen Maß, so dass der Hub der Spannungsmodulation weitgehend unabhängig von der Länge der Zweidrahtleitung etwa der gleiche bleibt, und zwar auch dann, wenn ein oder mehrere Teilnehmer plötzlich vermehrt Strom aus der Zweidrahtleitung ziehen.

Eine Verbesserung des Verfahrens besteht darin, dass die interne Speisespannung jedes Teilnehmers aus der Versorgungsspannung mit einer Zeitverzögerung allmählich ansteigend erzeugt wird. Auf diese Weise wird zusätzlich verhindert, dass die Versorgungsspannung plötzliche Änderungen erfährt, die den Flanken von Kommunikationspulsen ähneln.

Der Erfindung liegt die weitere Aufgabe zugrunde, eine Gefahrenmeldeanlage zu schaffen, die infolge einer verbesserten Kommunikationssicherheit eine größere Länge der Zweidrahtleitung ermöglicht.

Diese Aufgabe ist bei einer Gefahrenmeldeanlage mit den Merkmalen des Oberbegriffes des Anspruches 3 dadurch gelöst, dass der Konstantstromschaltung ein Spannungswandler vorgeschaltet ist, der die Versorgungsspannung auf eine interne Speisespannung herabsetzt, die mindestens um den Spannungshub der Pulse der Kommunikationstelegramme auf der Zweidrahtleitung kleiner als die Versorgungsspannung ist.

Analog dem oben erläuterten Verfahren wird dadurch erreicht, dass die Konstantstromschaltungen der Teilnehmer auch auf dem niedrigeren Pegel der Kommunikationspulse auf der Zweidrahtleitung Strom ziehen, weil die interne Speisespannung der Teilnehmer kleiner als der Pegel der Versorgungsspannung während der Dauer der Kommunikationspulse ist. Deshalb kann ohne Verschlechterung der Kommunikationssicherheit die Länge der Zweidrahtleitung vergrößert und/oder eine größere Anzahl an Teilnehmern und/oder Teilnehmer angeschlossen werden, die Aktoren mit vergleichsweise hohem Strom- bzw. Leistungsbedarf enthalten.

Vorzugsweise besteht der Spannungswandler aus einem einfachen Längsregler.

Dieser Längsregler kann einen Regeltransistor in Emitterfolger-Schaltung umfassen, in dessen Kollektor/Basis-Zweig eine Zenerdiode zur Erzeugung der Speisespannung am Emitter des Regeltransistors liegt, wobei in Serie mit dieser Zenerdiode ein RC-Glied geschaltet ist, dessen anderer Anschluß mit der auf dem Bezugspotential (Masse) liegenden Ader der Zweidrahtleitung verbunden ist. Die Zenerdiode bestimmt im Wesentlichen den Wert der internen Speisespannung. Das RC-Glied ist so bemessen, dass seine Zeitkonstante länger als die Dauer der Kommunikationspulse ist und vorzugsweise ein Mehrfaches dieser Pulsdauer beträgt. Zwischen dem Eingang des Längsreglers und dem die Versorgungsspannung führenden, mit der anderen Ader der Zweidrahtleitung verbundenen Anschluss kann eine Diode in Duchlassrichtung liegen. Während der niedrigen Pegel der Kommunikationspulse entlädt sich deshalb der Kondensator des RC-Gliedes über die Basis/Emitter-Strecke des Regeltransistors, so dass dieser im Durchlasszustand bleibt, und folglich der Teilnehmer auch während der Kommunikationspulse Strom zieht. Diese Diode verhindert, dass der Regeltransistor bei Versorgungsspannungspegeln, die unter dem Wert der internen Speisespannung liegen, invers leitend wird.

Bei einer verbesserten Ausführungsform liegt in Reihe mit der Zenerdiode eine Diode, die bei Absinken der internen Speisespannung des Teilnehmers eine Entladung des Kondensators des RC-Gliedes über die Kollektor/Emitter-Strecke des Regeltransistors verhindert. Die Diode stellt sicher, dass sich der Kondensator des RC-Gliedes ausschließlich über die Basis/Emitter-Strecke des Regeltransistors entlädt und diesen deshalb im Durchlasszustand hält.

Vorzugsweise ist an den Längsregler parallel zu der Konstantstromschaltung eine weitere, schaltbare Konstantstromschaltung angeschlossen. Diese weitere Konstantstromschaltung kann insbesondere so dimensioniert und/oder über den in den Teilnehmern stets vorhandenen Mikrocontroller gesteuert werden, dass der interne Speicherkondensator beim Einschalten der Versorgungsspannung und/oder bei einem erhöhten Strombedarf des Teilnehmers mit einem entsprechend höheren Strom geladen wird. Ein erhöhter Strombedarf des Teilnehmers liegt insbesondere vor, wenn der Teilnehmer durch Aktivierung einer internen Stromsenke ein stromkodiertes Datentelegramm an das Steuermodul sendet und/oder der Mikrocontroller eine weitere Teilnehmerschaltung, z.B. eine Gassensorschaltung oder einen akustischen Signalgeber, aktiviert.

Mindestens eine der Konstantstromschaltungen kann einen Steuereingang haben, der mit einem RC-Glied beschaltet ist, das zumindest beim Annschalten des Teilnehmers an die Versorgungsspannung den Anstieg des von der Konstantstromschaltung gelieferten Stroms verzögert. In der Regel schaltet das Steuermodul die Teilnehmer in einer Initialisierungsroutine zeitlich nacheinander an die Zweidrahtleitung und damit an die Versorgungsspannung an. Durch den verzögerten Stromanstieg wird vermieden, dass das Anschalten eines Teilnehmers zu einem plötzlichen Absinken der Versorgungsspannung führt, das für die bereits eingeschalteten Teilnehmer wie die fallende Flanke eines Kommunikationspulses wirken kann. Deshalb sind vorzugsweise beide Konstantstromschaltungen mit RC-Gliedern beschaltet.

Bevorzugt ist der Kondensator des RC-Gliedes der (jeweiligen) Konstantstromschaltung mit dem Steuereingang über einen Widerstand verbunden, der mit diesem Kondensator ein weiteres RC-Glied bildet, das eine Entladezeitkonstante hat, die größer als die Pulsdauer des längsten Kommunikationspulses ist und vorzugsweise ein Mehrfaches dieser Pulsdauer beträgt. Der interne Speicherkondensator, der z.B. während der Startimpulse und/oder anderer Pulse, die durch eine Absenkung des Pegels der Versorgungsspannung auf einen Wert unterhalb des Wertes der internen Speisepannung verkörpert werden, nicht geladen wird, erhält deshalb schon mit dem Ende des betreffenden Pulses, wenn also die Versorgungsspannung wieder ihren vollen Ausgangswert erreicht, wieder den Ladestrom, weil an dem Steuereingang der oder beider Konstantstromschaltungen die Steuerspannung infolge des weiteren RC-Gliedes auch während der Pulsdauer erhalten bleibt.

Vorzugsweise ist ein Anschluss des Mikrocontrollers des Teilnehmers mit dem Steuereingang der schaltbaren Konstantstromschaltung verbunden und liefert ein Sperrsignal, sobald die interne Betriebsspannung des Teilnehmers erreicht ist.

Bei einer Weiterbildung dieser Ausführungform erhält der Steuereingang dieser nach Erreichen der internen Betriebsspannung gesperrten Konstantstromschaltung bei einem erhöhten Strombedarf des Teilnehmers oder bei einem Absinken der internen Speisespannung über den gleichen Anschluß des Mikrocontrollers ein Freigabesignal, um den Speicherkondensator beschleunigt nachzuladen.

Ein erheblicher Strommehrbedarf eines Teilnehmers, z.B. infolge eines internen Fehlers, kann über die Konstantstromschaltung oder -schaltungen nicht und aus dem internen Speicherkondensator nur sehr kurzzeitig gedeckt werden. Um zu verhindern, dass der Teilnehmer dann vollständig ausfällt, kann an den Speicherkondensator eine Spannungsüberwachungsschaltung angeschlossen sein, die bei einem Absinken der internen Speisespannung oder der nahezu gleich großen, an dem Speicherkondensator anliegenden Spannung unter einen vorgegebenen Schwellwert einzelne Stromverbraucher des Teilnehmers abschaltet. Dadurch kann die Kommunikationsfähigkeit des Teilnehmers erhalten bleiben, so dass letzterer an das Steuermodul eine Fehlermeldung senden kann. Das Steuermodul kann dann seinerseits den Teilnehmer über einen adressierten Befehl abschalten.

Die Erfindung wird nachfolgend anhand der Zeichnung erläutert. Es zeigt:
- Figur 1:: ein Bockschaltbild eines Teilnehmers,
- Figur 2a:: ein vereinfachtes Diagramm der zeitabhängigen Versorgungsspannung ohne ohmsche Last,
- Figur 2b:: ein vereinfachtes Diagramm des zeitabhängigen Verlaufes der Versorgungsspannung mit ohmscher Last,
- Figur 3:: ein Schaltbild eines Ausführungsbeispiels der internen Spannungsversorgung eines Teilnehmers,
- Figur 4:: ein vereinfachtes Diagramm des zeitabhängigen Verlaufes der Versorgungsspannung für den Fall einer erhöhten Stromaufnahme des Teilnehmers mit einer Spannungsversorgung gemäß Fig. 3.

Wie einleitend erläutert, umfassen im Stand der Technik bekannte Gefahrenmeldeanlagen eine Zentrale (gegebenenfalls auch Subzentralen) mit mindestens einem im folgenden als Busmaster bezeichneten Steuermodul. An den Busmaster ist eine Zweidrahtleitung sowohl mit ihrem Anfang als auch mit ihrem Ende angeschlossen. An die Zweidrahtleitung sind in Abständen zahlreiche Teilnehmer elektrisch parallel angeschlossen. Die Zweidrahtleitung liefert die Versorgungsspannung für die Teilnehmer und dient gleichzeitig zur bidirektionalen Kommunikation zwischen dem Busmaster und den Teilnehmern. Die Zweidrahtleitung wird daher auch kurz als Ringbus bezeichnet.

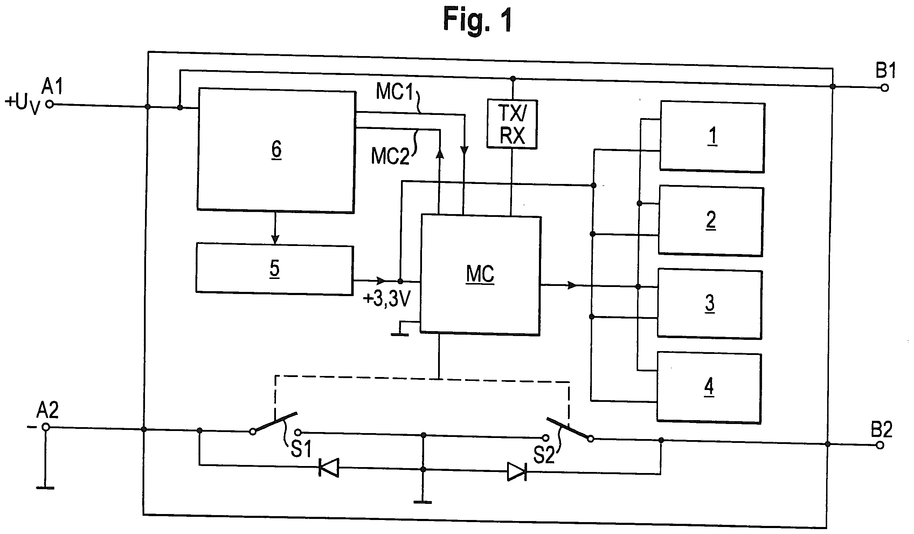

Figur 1 zeigt ein Blockschaltbild eines als Beispiel gewählten Teilnehmers, hier in Form eines Brandmelders. Er hat Eingangsanschlüsse A1 und A2 sowie Ausgangsanschlüsse B1 und B2. Die eine Ader der Zweidrahtleitung, hier die spannungsführende Ader zwischen A1 und B1, ist durch den Melder hindurchgeschleift. Die andere Ader, die in diesem Beispiel auf dem Bezugspotential GND (Ground) liegt, ist zwischen A2 und B2 über zwei in Serie liegende Halbleiterschalter S1 und S2 geführt. Der Busmaster kann die Schalter S1 und S2 über an den Teilnehmer gesendete Steuerbefehle schalten. Im normalen Betrieb sind S1 und S2 geschlossen. Der Brandmelder umfasst einen Streulichtsensor 1, einen Gassensor 2, einen Wärmesensor 3 und einen Aktor 4, der insbesondere ein elektroakustischer oder optischer Signalgeber sein kann. Ein Mikrocontroller MC kommuniziert mit diesen Komponenten und steuert sie sowie die Schalter S1 und S2. Der Mikrocontroller MC ist über einen Block TX/RX mit der spannungsführenden Ader A1-B1 der Zweidrahtleitung verbunden und kommuniziert mit dem Busmaster z.B. über eine UART-Schnittstelle. Der Mikrocontroller MC und die vorgenannten Komponenten 1 bis 4 erhalten ihre Betriebsspannung U_{B} von z.B. + 3,3 V von einem üblichen Spannungsregler 5, der an seinem Eingang eine entsprechend höhere Speisespannung von einer Spannungsversorgungsschaltung 6 erhält. Deren Eingang ist mit der Ader A1-B1 der Zweidrahtleitung verbunden, die z.B. auf + 40 V liegt.

Nach dem Stand der Technik besteht die Spannungsversorgungsschaltung 6 im Wesentlichen aus einer Konstantstromschaltung, die einen Puffer- oder Speicherkondensator auf die externe Versorgungsspannung U_{V} lädt. Die Spannungsmodulation der Versorgungsspannung U_{V} zur Übertragung bitkodierter Nachrichten von dem Busmaster zu dem Teilnehmer hat deshalb zur Folge, dass die Konstantstromschaltung der Zweidrahtleitung Strom bzw. Leistung nur während der Pulspausen entnimmt, weil während der Pulsdauer die Spannung, auf die der Speicherkondensator aufgeladen ist, höher als die momentane Versorgungsspannung ist.

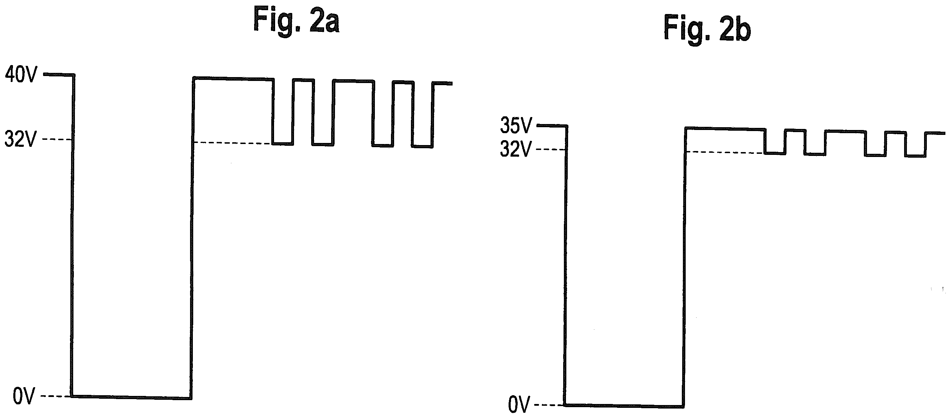

Die Diagramme in den Figuren 2a und 2b veranschaulichen in stark vereinfachter Form, dass deshalb der ohmsche Widerstand der Zweidrahtleitung dazu führt, dass der Spannungshub mit zunehmender Entfernung der Teilnehmer von dem Busmaster und zunehmender Anzahl der Teilnehmer immer kleiner wird. Figur 2a zeigt den Spannungsverlauf für einige auf einen langen Startimpuls folgende Kommunikationspulse am Anfang der Zweidrahtleitung, d.h. an den Anschlüssen des Busmasters. Die Versorgungsspannung beträgt 40 V. Der Spannungshub bzw. die Modulationstiefe beträgt (beispielsweise) 8 V. Figur 2b zeigt den gleichen Spannungsverlauf für einen z.B. einige hundert Meter von dem Busmaster entfernten Teilnehmer. Die Versorgungsspannung ist infolge des Ruhestromverbrauchs der Teilnehmer um 5 V auf 35 V abgesunken. Der Spannungshub beträgt jedoch nur noch ca. 3 V. Je kleiner der Spannungshub ist, desto eher kommt es zu Dekodier- und folglich Kommunikationsfehlern, zumal auch die Steilheit der Pulsflanken mit zunehmender Entfernung von dem Busmaster abnimmt (in Figur 2b nicht dargestellt). Der Spannungshub vermindert sich noch weiter, wenn gleichzeitig ein Teilnehmer eine bitkodierte Nachricht an den Busmaster in Form einer Strommodulation sendet, denn die erhöhte Stromaufnahme des betreffenden Teilnehmers verursacht ein zusätzliches Absinken des Pegels der Versorgungsspannung U_{V} auf der Zweidrahtleitung.

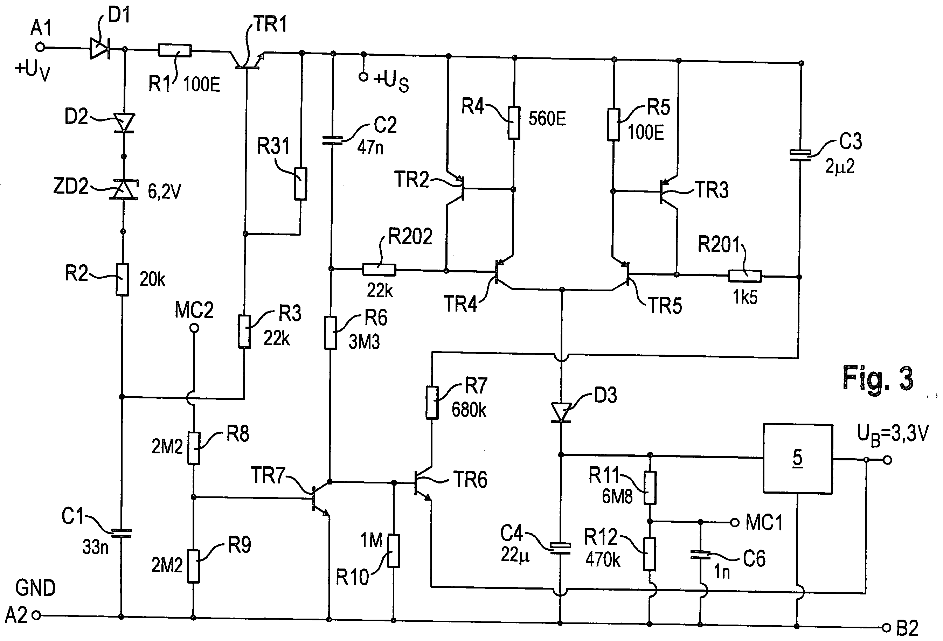

Diese Nachteile einer Stromversorgung der Teilnehmer nach dem Stand der Technik vermeidet die in Figur 3 als Schaltbild dargestellte Spannungsversorgung entsprechend dem Block 6 in Figur 1 (zum besseren Verständnis unter Hinzunahme des Blockes 5).

Die Schaltung gemäß Figur 3 ist mit den Anschlüssen A1, A2 des Teilnehmers verbunden. Weil die Teilnehmer im Fall eines Kurzschlusses oder einer Unterbrechung im Zug der Zweidrahtleitung auch von deren Ende her gespeist werden können, ist die Schaltung auch mit dem Anschluss B2 des Teilnehmers verbunden.

Am Anschluss A1 liegt in dem zunächst betrachteten Ruhefall eine Spannung U_{V} von z.B. + 40 V gegenüber dem Bezugspotential GND an. Auf eine Diode D1 folgt ein Längsregler, der im Wesentlichen einen Transistor TR1 mit einem Kollektorwiderstand R1 und einem hochohmigen Emitter/Basis-Widerstand R31 umfasst. Die Diode D1 verhindert eine Rückspeisung in die Zweidrahtleitung, wenn U_{V} z.B. bei Übertragung eines Startimpulses von 0 V oder während der Pulsdauer von Kommunikationspulsen auf einen Pegel sinkt, der kleiner als die Spannung am Emitter von TR1 ist. TR1 erhält seinen Basisstrom über eine Diode D2, eine Zenerdiode ZD2, hier mit einer Zenerspannung von 6,2 V, einen Widerstand R2 und einen Widerstand R3. Zwischen R2 und R3 ist ein Kondensator C1 mit GND verbunden. Der Widerstand R2 und der Kondensator C1 bilden ein RC-Glied. Beim Anlegen von U_{V} erhält deshalb TR1 seinen Basisstrom wegen R2, C1 mit einer zeitlichen Verzögerung. Am Emitter von TR1 stellt sich eine Spannung U_{S} ein, die mit der angegebenen Dimensionierung bei rund 33 V liegt. Die Zeitkonstante von R2, C1 ist so bemessen, dass sie ein Mehrfaches der Bitzeit, also der Pulsdauer eines Kommunikationspulses, beträgt. Die Zenerspannung von ZD2 ist unter Berücksichtigung der Durchlassspannungen von D1 und D2 mindestens gleich dem Spannungshub der Kommunikationspulse am Anfang der Zweidrahtleitung gewählt. Wenn der Pegel von U_{V} auf den den Kommunikationspulsen entsprechenden Wert, angenommen auf 34 V, fällt, liefert deshalb C1 während der Pulsdauer den Basisstrom für TR1, der deshalb leitend bleibt, so dass die Spannung U_{S} an seinem Emitter zumindest im Wesentlichen konstant und folglich von den Pegelschwankungen von Uᵥ während der Kommunikationspulse entkoppelt bleibt. Dabei verhindert D2, dass sich C1 über die niederohmige Kollektor/Emitter-Strecke von TR1 entladen kann.

Die interne Speisespannung U_{S} liegt an zwei parallelen Konstantstromschaltungen an, die unterschiedlich hohe Konstantströme liefern. Zum Aufstarten oder Hochlaufen benötigt der Melder einen sehr viel höheren als den Ruhestrom, der z.B. bei 100 bis 200 µA liegen kann. Das gleiche gilt, wenn der Melder Datentelegramme in Form einer Strommodulation an den Busmaster sendet und/oder Aktoren wie optische oder akustische Signalgeber aktiviert werden. Dieser erhöhte Leistungs- bzw. Strombedarf wird über die zweite Konstantstromquelle gedeckt.

Die erste Konstantstromschaltung umfasst im Wesentlichen TR2, TR4 und R4, die wie an sich bekannt zusammengeschaltet sind. Die Basis von TR4 und damit auch der Kollektor von TR2 sind mit dem Bezugspotential über Widerstände R202 und R6 sowie die Basis/Emitter-Strecke eines Transistors TR6 mit dem Ausgang des Spannungsreglers 5 (vgl. auch Fig. 1) verbunden. Dieser Ausgang liegt vor und beim Anschalten von U_{V} auf GND und nach ausreichendem Anstieg der Spannung am Eingang des Spannungsreglers 5 auf + U_{B}, z.B. + 3,3 V. Der Verbindungspunkt von R202 und R6 ist über einen Kondensator C2 mit dem Emitter von TR1, d.h. mit U_{S}, verbunden. Wenn der Emitter von TR1 auf U_{S} geht, hält deshalb C2 über R202 den Transistor TR4 und damit diese Konstantstromschaltung insgesamt so lange gesperrt, bis C2 über R6 und die Basis/Emitter-Strecke von TR6 auf etwa 0,6 V geladen ist. C2 bildet also mit R6 ein RC-Glied. Infolgedessen wird TR4 zeitverzögert leitend und liefert dann über eine Entladungsschutzdiode D3 an einen Speicherkondensator C4 einen Ladestrom, der durch R4 in Verbindung mit TR2 z.B. auf 1 mA begrenzt ist.

Die zweite Konstantstromschaltung ist schaltbar und für einen höheren Konstantstrom von z.B. 6 mA dimensioniert. Sie umfasst im Wesentlichen die Transistoren TR3 und TR5 sowie einen Widerstand R5 und ist schaltungsmäßig analog zu der ersten Konstantstromschaltung aufgebaut. Der Kollektor von TR5 ist wie der Kollektor von TR4 über D3 mit C4 verbunden. Die Basis von TR5 und der Kollektor von TR3 sind über einen Widerstand R201 und einen Widerstand R7 mit dem Kollektor eines Transistors TR6 verbunden. Der Verbindungspunkt zwischen R201 und R7 ist über einen Kondensator C3 mit dem Emitter von TR1, d.h. mit der der Speisespannung U_{S} verbunden. C3 bildet mit R7 ein RC-Glied und hat für die zweite Konstantstromschaltung dieselbe Funktion wie R6, C2 für die erste Konstantstromschaltung. Der Kondensator C3 hat jedoch einen wesentlich höheren Wert als C2 und der Widerstand R7 einen wesentlich geringeren Wert als R6.

Die RC-Glieder R6, C2, und R7, C3 der Konstantstromschaltungen verhindern, dass der Melder insbesondere beim Anlegen der Versorgungsspannung u.a. wegen C4 einen hohen Einschaltstrom zieht. Die Zeitkonstante von R6, C2 kann z.B. 100 bis 200 ms betragen. Die Zeitkonstante von R7, C3 ist wegen des höheren Stroms, den die zweite Konstantstromschaltung zieht, zweckmäßig deutlich größer.

Beim Aufstarten des Melders durch Anlegen der Versorgungsspannung U_{V} laden beide Konstantstromschaltungen den Speicherkondensator C4 über D3 annähernd auf die Speisespannung U_{S}, d.h. abzüglich der Spannungsabfälle über die Transistor- und Diodenstrecken. An den Speicherkondensator C4 ist der übliche Spannungsregler 5 (vgl. Fig. 1) angeschlossen, der die interne Betriebsspannung U_{B} von 3,3 V liefert.

Außerdem ist parallel zu dem Speicherkondensator C4 ein Spannungsteiler R11, R12 geschaltet. Parallel zu R12 liegt ein Entstörkondensator C6. Der Abgriff dieses Spannungsteilers ist mit dem Port oder Anschluss MC1 des Mikrocontrollers MC in Figur 1 verbunden. Über diesen Anschluss MC1 überwacht der Mikrocontroller MC die Spannung über dem Speicherkondensator C4. Wenn diese Spannung unter einen vorgegebenen Schwellenwert sinkt, schaltet der Mikrocontroller bestimmte Schaltungen des Melders, insbesondere solche mit einem hohen Strom- bzw. Leistungsverbrauch, ab, um die Kommunikationsfähigkeit des Melders mit dem Busmaster zu erhalten. Alternativ oder zusätzlich kann der Mikrocontroller die zweite Konstantstromschaltung anschalten, wie unten näher erklärt werden wird.

Die zweite Konstantstromschaltung ist über die Basis von TR5 als Steuereingang zu- und abschaltbar. Hierzu dienen TR6 und ein NPN-Transistor TR7, mit dessen Kollektor die Basis von TR6 verbunden ist. Zwischen der Basis von TR6 und GND liegt ein Widerstand R10. Die Basis von TR7 ist über einen Widerstand R9 mit dem Bezugspotential und über einen Widerstand R8 mit einem Anschluss MC2 des Mikrocontrollers MC verbunden. Bis der Mikrocontroller initialisiert und damit funktionsfähig ist, ist MC2 hochohmig, folglich TR7 wegen R9 gesperrt und TR6 leitend. Die zweite Konstantstromschaltung lädt deshalb nach dem Anschalten von U_{V} den Speicherkondensator C4 parallel zu der ersten Konstantstromschaltung, vorzugsweise jedoch mit dem genannten höheren Strom, der wegen R7, C3 verzögert auf seinen Endwert zunimmt.

Sobald der Mikrocontroller mit U_{B} versorgt wird und arbeitet, geht sein Anschluss MC2 auf den logischen Pegel H. Infolge dessen wird TR7 durchlässig und sperrt damit TR6, mit der Folge, dass TR5 und damit auch TR3 sperren und die zweite Konstantstromschaltung abgeschaltet ist. TR4 erhält nun seinen Basisstrom über TR7. Die erste Konstantstromschaltung bleibt also angeschaltet.

Der Mikrocontroller kann zusätzlich so programmiert sein, dass er seinen Anschluss MC2 immer dann auf den logischen Wert L setzt (oder hochohmig macht), wenn er entweder einen weiteren Stromverbraucher des Melders zuschaltet oder/und die Spannung an seinem Anschluss MC1 unter den Schwellenwert fällt. Dann wird die zweite Konstantstromschaltung zugeschaltet und liefert ihren wegen R7, C3 verzögert ansteigenden Strom an C4.

Im Fall von Kommunikationsprotokollen, die die einleitend genannten "langen" Impulse wie Start-, Trenn- oder andere Sonderimpulse umfassen, deren Pegel auf 0 V oder jedenfalls auf einen Wert unter U_{S} gehen, haben die Basisvorwiderstände R202 in der ersten Konstantstromschaltung und R201 in der zweiten Konstantstromschaltung die folgende Funktion, insbesondere wenn mehrere solche Impulse in kurzen Zeitabständen aufeinander folgen. Wenn der Pegel von U_{V} unter den Wert fällt, bei dem ZD2 nicht mehr leitet, sperrt TR1. Folglich sinkt U_{S} während der Dauer der "langen" Impulse. Ohne R202 bzw. R201 würden sich C2 bzw. C3 deshalb über TR4 (und TR2) bzw. TR5 (und TR3) rasch entladen. Wenn U_{S} wieder den Ausgangswert annimmt, würden die von den Konstantstromschaltungen gelieferten Ströme wegen der RC-Glieder R6, C2 bzw. R7, C3 jedoch mit entsprechender Verzögerung einsetzen und auf ihre Endwerte ansteigen. Diese Verzögerung kann C4 nicht puffern oder überbrücken. Der Melder würde sich deshalb abschalten. Dies wird durch die Basisvorwiderstände R202 bzw. R201 vermieden. C2 und R202 bzw. C3 und R201 bilden nämlich jeweils ein weiteres RC- oder Zeitglied. Die Zeitkonstanten dieser Zeitglieder sind so bemessen, dass C2 für TR4 und C3 für TR5 den jeweiligen Basisstrom auch während der Dauer der genannten "langen" Impulse unter Berücksichtigung deren kürzester zeitlicher Aufeinanderfolge liefert. Infolgedessen laden die Konstantstromschaltungen C4 praktisch sofort (mit der im Verhältnis kleinen Zeitverzögerung durch R2, C1) wieder nach, jedes Mal, wenn U_{V} wieder auf dem hohen Ausgangspegel ist. Die vorgenannten Zeitkonstanten liegen zweckmäßig in der gleichen Größenordnung wie die Dauer der längsten Impulse, also für die eingangs genannten Impulsdauern z.B. im Bereich von 3 ms.

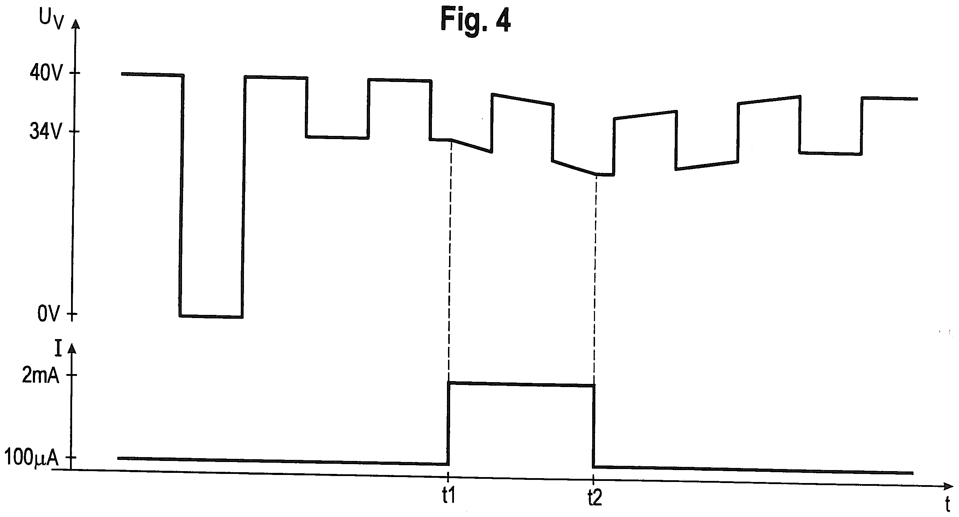

In Figur 4 ist stark vereinfacht der zeitliche Verlauf des Pegels der Versorgungsspannung U_{V} dargestellt, der sich während der Übertragung einer Nachricht durch Spannungsmodulation ergibt, wenn das Verfahren und die Spannungsversorgung nach dem vorliegenden Vorschlag verwendet werden. Zur Verdeutlichung ist der zeitliche Maßstab im Verhältnis zu den Figuren 2a, 2b stark gedehnt.

Der wie im Fall der Figur 2b von dem Busmaster erheblich entfernt befindliche Teilnehmer erhält die Kommunikationspulse mit nahezu dem vollen Modulationshub wie in Figur 2a. Von t1 bis t2 (zur Verdeutlichung ist das Zeitintervall in der Größenordnung der Pulsdauern gewählt) zieht der Teilnehmer statt seines Ruhestromes I von z.B. 100 µA einen Strom I von z.B. 2 mA. Der obere und der untere Pegel von U_{V} sinken im Wesentlichen proportional, jedoch wegen des RC-Gliedes R6, C2 und, falls der Mikrocontroller MC die zweite Konstantstromquelle eingeschaltet hat, auch wegen des RC-Gliedes R7, C3, nicht sprungartig sondern gleitend. Die Pegel steigen ebenso nach t2 auch wieder gleitend an.

## Patentansprüche

1. Gefahrenmeldeanlage umfassend einer Zentrale, an die über eine Zweidrahtleitung Teilnehmer (A1, A2; B1, B2) angeschlossen sind, die von der Zentrale über die als Feldbus betriebene Zweidrahtleitung sowohl eine Versorgungsspannung (U_{V}) als auch Kommunikationstelegramme in Form von der Versorgungsspannung als Spannungsmodulation aufgeprägten Pulsfolgen erhaltet und jeder Teilnehmer eine an die Zweidrahtleitung angeschlossene Konstantstromschaltung (TR4, TR2) umfasst, über die ein Speicherkondensator (C4) geladen wird, an den ein Spannungsregler (5) angeschlossen ist, der ausgestaltet ist, um eine interne Betriebsspannung (U_{B}) zu erzeugen, wobei der Konstantstromschaltung ein Spannungswandler (R1, TR1, ZD2) vorgeschaltet ist, der ausgestaltet ist, um die Versorgungsspannung (U_{V}) auf eine interne Speisespannung (U_{S}) herabzusetzen, die mindestens um einen Spannungshub von Pulsen der Kommunikationstelegramme auf der Zweidrahtleitung kleiner als die Versorgungsspannung (U_{V}) ist; **dadurch gekennzeichnet dass**, die Konstantstromschaltung (TR4, TR2) einen Steuereingang hat, der mit einem RC-Glied (R6, C2; R7, C3) beschaltet ist, das ausgestaltet ist, um beim Einschalten der Versorgungsspannung (U_{V}) einen Anstieg des von der Konstantstromschaltung gelieferten Stroms (Ladestroms) zu verzögern.

2. Gefahrenmeldeanlage nach Anspruch 1, wobei der Spannungswandler aus einem Längsregler (R1, TR1) besteht.

3. Gefahrenmeldeanlage nach Anspruch 2, wobei der Längsregler einen Regeltransistor (TR1) in Emitterfolgerschaltung umfasst, in dessen Kollektor/Basis-Zweig eine Zenerdiode (ZD2) zur Erzeugung der internen Speisespannung (Uₛ) am Emitter des Regeltransistors und in Serie mit der Zenerdiode (ZD2) ein RC-Glied (R2, C1) zu dem Bezugspotential (GND) der Zweidrahtleitung liegen.

4. Gefahrenmeldeanlage nach Anspruch 3, wobei zwischen dem Eingang des Längsreglers und dem spannungsführenden Anschluss (U_{V}) der Zweidrahtleitung eine Diode (D1) in Durchlassrichtung liegt.

5. Gefahrenmeldeanlage nach Anspruch 4 wobei eine Zeitkonstante des RC-Gliedes (R2, C1) größer als die Pulsdauer der Kommunikationspulse ist.

6. Gefahrenmeldeanlage nach einem der Ansprüche 3 bis 4, wobei in Reihe mit der Zenerdiode (ZD2) eine Diode (D2) liegt, die bei Absinken der internen Speisespannung (Uₛ) des Teilnehmers eine Entladung des Kondensators (C1) des RC-Gliedes (R2, C1) über die Kollektor/Emitter-Strecke des Regeltransistors (TR1) verhindert.

7. Gefahrenmeldeanlage nach Anspruch 2, wobei an den Längsregler parallel zu der Konstantstromschaltung (TR4, TR2) eine weitere, schaltbare Konstantstromschaltung (TR5, TR3) angeschlossen ist.

8. Gefahrenmeldeanlage nach Anspruch 1, wobei der Kondensator (C2; C3) des RC-Gliedes (R6, C2; R7, C3) mindestens einer der Konstantstromschaltungen mit deren Steuereingang über einen Widerstand (R202; R201) verbunden ist, der mit dem Kondensator (C2; C3) ein weiteres RC-Glied bildet, das eine Entladezeitkonstante hat, die größer als die Pulsdauer des längsten Kommunikationspulses ist.

9. Gefahrenmeldeanlage nach einem der Ansprüche 1 bis 9, wobei der Steuereingang einer der Konstantstromschaltungen (TR5, TR3) über einen Anschluss (MC2) des Mikrocontrollers (MC) des Teilnehmers ein Sperrsignal erhält, sobald die interne Betriebsspannung (U_{B}) des Teilnehmers erreicht ist.

10. Gefahrenmeldeanlage nach Anspruch 9, wobei der Steuereingang der nach Erreichen der internen Betriebsspannung gesperrten Konstantstromschaltung (TR5; TR3) bei erhöhtem Strombedarf des Teilnehmers über den gleichen Anschluss (MC2) des Mikrokontrollers (MC) ein Freigabesignal erhält.

11. Gefahrenmeldeanlage nach Anspruch 1, wobei an den Speicherkondensator (C4) eine Spannungsüberwachungsschaltung (R11, R12, MC1) angeschlossen ist, die bei einem Absinken der an dem Spannungsregler (5) anliegenden Spannung unter einen vorgegebenen Schwellwert einzelne Stromverbraucher des Teilnehmers abschaltet.

12. Verfahren zum Betreiben einer Gefahrenmeldeanlage nach einem der Ansprüche 1 bis 11.

## Claims

1. Hazard warning system comprising a central station, to which subscribers (A1, A2; B1, B2) are connected via a two-wire line, which subscribers receive from the central station, via the two-wire line operated as a field bus, both a supply voltage (U_{V}) and communication messages in the form of pulse trains impressed on the supply voltage as voltage modulation, and each subscriber comprises a constant current circuit (TR4, TR2) connected to the two-wire line, by means of which circuit a storage capacitor (C4) is charged, to which storage capacitor a voltage regulator (5) is connected in order to generate an internal operating voltage (U_{B}), the constant current circuit being connected upstream of a voltage transformer (R1, TR1, ZD2) which is configured to reduce the supply voltage (U_{V}) to an internal feed voltage (U_{S}) that is smaller than the supply voltage (U_{V}) at least by a voltage swing of pulses of the communication messages on the two-wire line, **characterised in that** the constant current circuit (TR4, TR2) has a control input connected to an RC element (R6, C2; R7, C3), which element is configured to delay an increase in the current (charging current) produced by the constant current circuit when the supply voltage (U_{V}) is switched on.

2. Hazard warning system according to claim 1, wherein the voltage transformer consists of an in-phase regulator (R1, TR1).

3. Hazard warning system according to claim 2, wherein the in-phase regulator comprises a regulating transistor (TR1) in an emitter-follower circuit, a Zener diode (ZD2) for generating the internal feed voltage (U_{S}) at the emitter of the regulating transistor, and an RC element (R2, C1), connected in series to the Zener diode (ZD2), for the reference potential (GND) of the two-wire line, being in the collector-base branch of said circuit.

4. Hazard warning system according to claim 3, wherein a diode (D1) is between the input of the in-phase regulator and the voltage-conducting terminal (U_{V}) of the two-wire line in the forward direction.

5. Hazard warning system according to claim 4, wherein a time constant of the RC element (R2, C1) is greater than the pulse length of the communication pulse.

6. Hazard warning system according to either claim 3 or claim 4, wherein a diode (D2) is connected in series to the Zener diode (ZD2), which diode prevents discharge of the capacitor (C1) of the RC element (R2, C1) over the collector-emitter path of the regulating transistor (TR1) when the internal feed voltage (Uₛ) of the subscriber is lowered.

7. Hazard warning system according to claim 2, wherein an additional, switchable constant current circuit (TR5, TR3) is connected to the in-phase regulator in parallel with the constant current circuit (TR4, TR2).

8. Hazard warning system according to claim 1, wherein the capacitor (C2; C3) of the RC element (R6, C2; R7, C3) of at least one of the constant current circuits is connected to the control input thereof via a resistor (R202; R201) that forms, together with the capacitor (C2; C3), an additional RC element having a discharge time constant that is greater than the pulse length of the longest communication pulse.

9. Hazard warning system according to any of claims 1 to 9, wherein the control input of one of the constant current circuits (TR5, TR3) receives an inhibiting signal via a terminal (MC2) of the microcontroller (MC) of the subscriber as soon as the internal operating voltage (U_{B}) of the subscriber has been reached.

10. Hazard warning system according to claim 9, wherein the control input of the constant current circuit (TR5; TR3) that is inhibited after the internal operating voltage has been reached receives an enabling signal via the same terminal (MC2) of the microcontroller (MC) when there is an increased current requirement for the subscriber.

11. Hazard warning system according to claim 1, wherein a voltage monitoring circuit (R11, R12, MC1) is connected to the storage capacitor (C4), which voltage monitoring circuit disconnects individual electrical loads in the subscriber if the voltage applied to the voltage regulator (5) falls below a predetermined threshold value.

12. Method for operating a hazard warning system according to any of claims 1 to 11.

## Revendications

1. Installation de signalisation de dangers comprenant
un centre, auquel des abonnés (A1, A2 ; B1, B2) sont raccordés, par l'intermédiaire d'une ligne bifilaire, qui reçoivent du centre, par l'intermédiaire de la ligne bifilaire fonctionnant comme un bus de terrain, à la fois une tension d'alimentation (U_{V}) et des télégrammes de communication sous la forme de séries d'impulsions imprimées sur la tension d'alimentation en tant que modulation de tension, et chaque abonné comprend un circuit de courant constant (TR4, TR2), raccordé à la ligne bifilaire, par l'intermédiaire duquel un condensateur accumulateur (C4) est chargé, auquel est raccordé un régulateur de tension (5), qui est configuré pour générer une tension de service (U_{B}) interne, dans laquelle est installé en amont du circuit de courant constant un convertisseur de tension (R1, TR1, ZD2), qui est configuré pour réduire la tension d'alimentation (U_{V}) à une tension d'alimentation (U_{S}) interne, qui est inférieure à la tension d'alimentation (U_{V}) au moins d'une élévation de tension d'impulsions des télégrammes de communication sur la ligne bifilaire, **caractérisée en ce que**
le circuit de courant constant (TR4, TR2) a une entrée de commande, qui est branchée à un organe RC (R6, C2 ; R7, C3), qui est configuré pour retarder, lors de l'activation de la tension d'alimentation (U_{V}), une augmentation du courant (courant de charge) fourni par le circuit de courant constant.

2. Installation de signalisation de dangers selon la revendication 1, dans laquelle le convertisseur de tension est constitué d'un régulateur série (R1, TR1).

3. Installation de signalisation de dangers selon la revendication 2, dans laquelle le régulateur série comprend un transistor de régulation (TR1) dans un circuit suiveur émetteur, dans la branche collecteur-base duquel se situent une diode Zener (ZD2) servant à générer la tension d'alimentation (U_{S}) interne à l'émetteur du transistor régulateur et, en série avec la diode Zener (ZD2), un organe RC (R2, C1) au potentiel de référence (GND) de la ligne bifilaire.

4. Installation de signalisation de dangers selon la revendication 3, dans laquelle se situe, entre l'entrée du régulateur série et le raccord de mise à la tension (Uᵥ) de la ligne bifilaire, une diode (D1) en sens passant.

5. Installation de signalisation de dangers selon la revendication 4, dans laquelle une constante temporelle de l'organe RC (R2, C1) est plus grande que la durée d'impulsion des impulsions de communication.

6. Installation de signalisation de dangers selon l'une quelconque des revendications 3 à 4, dans laquelle se situe, en série avec la diode Zener (ZD2), une diode (D2), qui empêche, en cas de baisse de la tension d'alimentation (U_{S}) interne de l'abonné, une décharge du condensateur (C1) de l'organe RC (R2, C1) sur le tronçon collecteur/émetteur du transistor de régulation (TR1).

7. Installation de signalisation de dangers selon la revendication 2, dans laquelle un autre circuit de courant constant (TR5, TR3) commutable est raccordé au régulateur série de manière parallèle au circuit de courant constant (TR4, TR2).

8. Installation de signalisation de dangers selon la revendication 1, dans laquelle le condensateur (C2 ; C3) de l'organe RC (R6, C2 ; R7, C3) d'au moins un des circuits de courant constant est relié à son entrée de commande par l'intermédiaire d'une résistance (R202 ; R201), qui forme avec le condensateur (C2 ; C3) un autre organe RC, qui a une constante de temps de décharge qui est supérieure à la durée d'impulsion de l'impulsion de communication la plus longue.

9. Installation de signalisation de dangers selon l'une quelconque des revendications 1 à 8, dans laquelle l'entrée de commande d'un des circuits de courant constant (TR5, TR3) reçoit, par l'intermédiaire d'un raccord (MC2) du microcontrôleur (MC) de l'abonné, un signal de blocage dès que la tension de service (Uₛ) interne de l'abonné est atteinte.

10. Installation de signalisation de dangers selon la revendication 9, dans laquelle l'entrée de commande du circuit de courant constant (TR5 ; TR3) bloqué une fois que la tension de service interne est atteinte reçoit, lors d'une augmentation du besoin en courant de l'abonné, un signal de déblocage par l'intermédiaire du même raccord (MC2) du microcontrôleur (MC).

11. Installation de signalisation de dangers selon la revendication 1, dans laquelle est raccordé au condensateur accumulateur (C4) un circuit de surveillance de tension (R11, R12, MC1), qui désactive, dans le cas d'une baisse de la tension appliquée sur le régulateur de tension (5) sous une valeur de seuil spécifiée, divers consommateurs de courant de l'abonné.

12. Procédé servant à faire fonctionner une installation de signalisation de dangers selon l'une quelconque des revendications 1 à 11.
